# FASCICULE DE BREVET EUROPEEN

(11) **EP 1 321 335 B1**
(45) Date de publication et mention de la délivrance du brevet: **13.04.2005**
(21) Numéro de dépôt: 02293189.3
(22) Date de dépôt: 20.12.2002
(51) Int. Cl.: B60R 7/02

(54) **Tapis de véhicule**
Teppich für Fahrzeug
Carpet for vehicle

(30) Priorité: 20.12.2001 FR 0116528
(43) Date de publication de la demande: 25.06.2003
(73) Titulaire: Renault s.a.s., 92100 Boulogne Billancourt (FR)
(72) Inventeur: Boyot, Lionel, 78370 Plaisir (FR)

(56) Documents cités:
- EP-A- 0 864 466
- GB-A- 2 267 876
- US-A- 4 226 348
- US-A- 5 584 412
- US-B1- 6 308 873

## Description

La présente invention concerne un tapis de véhicule.

Plus particulièrement, elle concerne un tapis dans lequel est intégré un dispositif de rangement.

Actuellement, il existe différents types de rangements dans les véhicules, notamment dans les coffres, tels que des filets de retenue, ou des caisses pliables.

Les filets sont en général composés de mailles entrelacées, destinées à retenir les objets. Ils comportent des moyens de fixation permettant de les attacher au tapis du coffre du véhicule. Ces moyens de fixation sont des crochets fixés sur le plancher du coffre, autour desquels est glissée une maille ou une boucle du filet. Ce type de rangement permet de maintenir les objets sous le filet, évitant à ceux-ci d'être projetés contre les parois de l'habitacle du véhicule. Cependant ces filets ne sont pas adaptés aux produits fragiles, qui se retrouvent écrasés sous la force de maintien que ceux-ci exerce.

D'autres solutions, telles que des caisses pliables transportables sont utilisées pour le rangement dans un coffre du véhicule. Ces caisses sont constituées par des volets perpendiculaires les uns aux autres, liés par des moyens d'articulation permettant aux volets d'être repliés afin de former un objet sensiblement plat lorsque la caisse n'est pas utilisée.

Lorsque ces caisses ne sont pas fixées à l'habitacle du véhicule, elles sont entraînées contre les parois du coffre, en cas de mouvement brusque du véhicule, générant ainsi des bruits de claquement et un risque de détérioration de l'élément de rangement.

La publication US-A-5584412 décrit un dispositif de rangement dans lequel les volets transversaux sont encastrés dans le fond d'une caisse, de surface identique au coffre, et calée dans celui-ci.

Cependant la fabrication de ce type de rangement est plus coûteuse, car elle nécessite un outillage plus compliqué. De plus les parois d'une telle caisse ne sont pas rabattables et limitent la modularité du véhicule lorsque les sièges arrières sont rabattus.

La demande de brevet EP-A-0 864 466 décrit un dispositif pour compartimenter un coffre de véhicule, comprenant un fond autour duquel se prolonge un bord surélevé, et autour duquel des parois avant et arrière sont montées pivotantes le long dudit bord. Cependant cette solution n'offre pas la possibilité d'obtenir un tapis de surface sensiblement plane, et la caisse pliable repliée est alors encombrante en cas de chargement important.

Pour obvier à ces inconvénients l'invention propose un tapis de véhicule qui comporte des moyens pour l'agencement d'un casier de rangement, ces moyens comportant au moins deux volets pivotant entre une position horizontale escamotée et une position verticale dépliée, dans laquelle ils délimitent chacun une zone de rangement, caractérisé en ce que en position escamotée, la surface formée par la face supérieure du tapis et les volets est sensiblement plane, pour constituer un casier escamotable intégré au tapis.

Selon un autre aspect de l'invention, le tapis comporte au moins un logement prévu pour accueillir les différents moyens d'aménagement du casier en position horizontale escamotée.

Selon une autre caractéristique, le fond du casier est constitué par le tapis.

Selon une autre caractéristique, les volets du casier sont montés pivotants par l'intermédiaire de charnières.

Selon un autre mode de réalisation, le tapis comporte au moins une couche inférieure support et une couche supérieure de moquette, et le fond du casier est constitué par la couche inférieure support du tapis, et les charnières sont formées par la couche supérieure de moquette qui recouvre les volets du casier.

Selon une autre variante, le tapis est réalisé dans un matériau rigide.

Selon une autre caractéristique, les volets coopèrent entre eux par l'intermédiaire d'un loquet, pour être maintenus en position verticale dépliée.

Selon une autre caractéristique, au moins deux volets comportent chacun une poignée de préhension pour faciliter le déploiement des volets et/ou la manipulation du tapis avec le casier intégré.

D'autres caractéristiques et avantages de la présente invention apparaîtront clairement à la lecture de la description suivante d'un mode de réalisation et d'utilisation particulier de celle-ci, en liaison avec les figures annexées, dans lesquelles,
la figure 1 est une vue en perspective qui illustre une portion d'un tapis selon l'invention, représenté en position dépliée,
la figure 2 est une vue analogue à celle de la figure 1 qui représente le tapis en position escamotée,
la figure 3 est une vue schématique en coupe par un plan transversal et vertical du tapis illustré à la figure 1,
la figure 4 est une vue en perspective éclatée des principaux composants du tapis représenté aux figures 1 à 3.

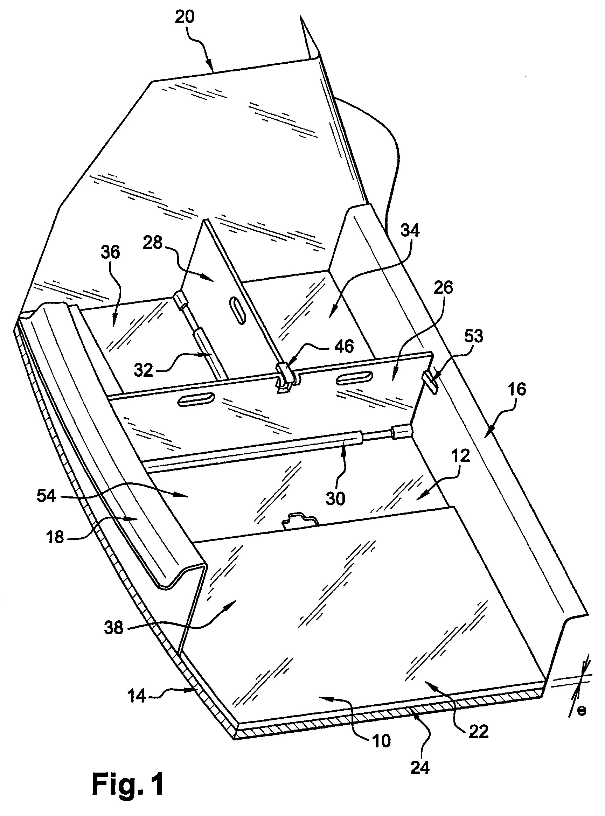

La figure 1 représente un tapis 10 agencé dans un coffre 12 de véhicule, qui contient un agencement d'un casier de rangement. Ce tapis 10 recouvre toute la surface du plancher en tôle 14 du coffre, qui est limitée longitudinalement par le bord 16 de la banquette et le bord 18 hayon, et transversalement par les deux passages latéraux 20 de roues, dont l'un, de gauche, est représenté.

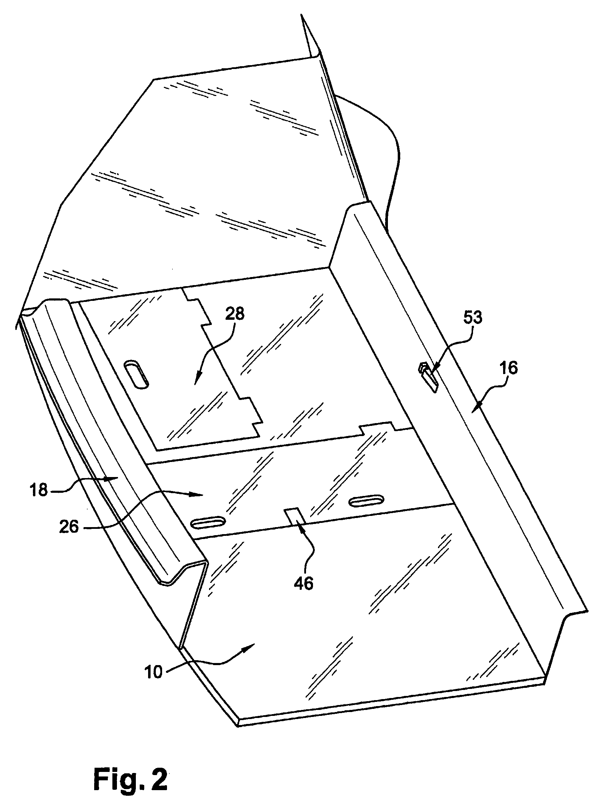

Ce tapis 10 d'épaisseur « e », est rigide et formé d'une seule couche de matière pour laquelle on a définit une face supérieure 22 et une face inférieure 24, qui est en contact en appui vertical sur le plancher 14 du coffre du véhicule. Il comprend aussi deux volets 26, 28 qui pivotent respectivement autour de deux axes 30, 32 parallèles au plan horizontal du tapis à la surface du tapis, entre une position escamotée représentée à la figure 2 et une position dépliée représentée à la figure 1, délimitant ainsi trois compartiments de rangement 34, 36 et 38. Tel que représenté, un premier volet 26 pivote autour d'un axe longitudinal 30 et une deuxième volet 28 pivote autour d'un axe transversal 32, les axes géométriques horizontaux étant situés sensiblement dans l'épaisseur du tapis.

Le tapis 10 comporte des logements 54 prévus dans son épaisseur et qui sont ouverts dans sa face supérieure 22, et destinés à accueillir les différents moyens d'aménagements du casier, tels que les volets 26, 28.

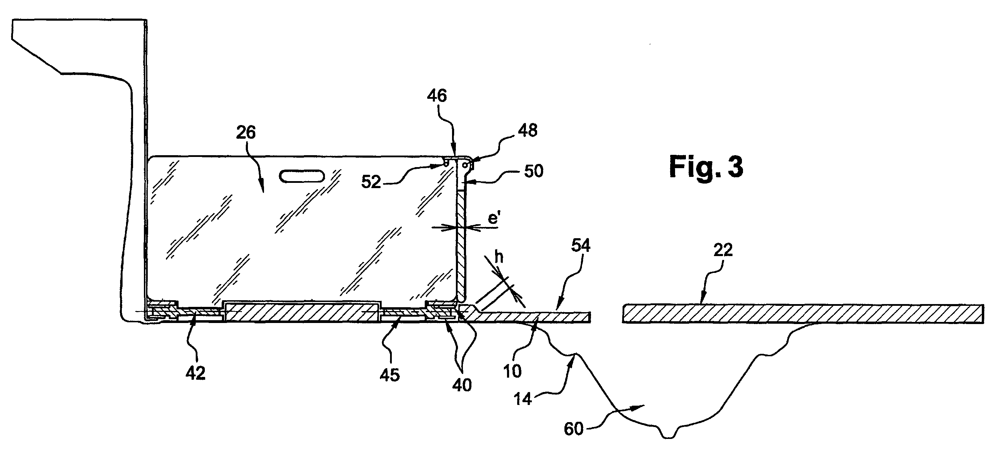

Tel que représenté à la figure 3, la profondeur h de ces logements 54 est sensiblement égale à l'épaisseur « e' » des volets 26, 28 de manière à obtenir, lorsque les volets sont rangés dans les logements, en position escamotée, une surface du tapis 10 pratiquement plane et continue, comportant notamment les faces externes des volets qui sont co-planaires à la face supérieure 22. Le fond de ces logements est formé par la matière dans laquelle est réalisée le tapis.

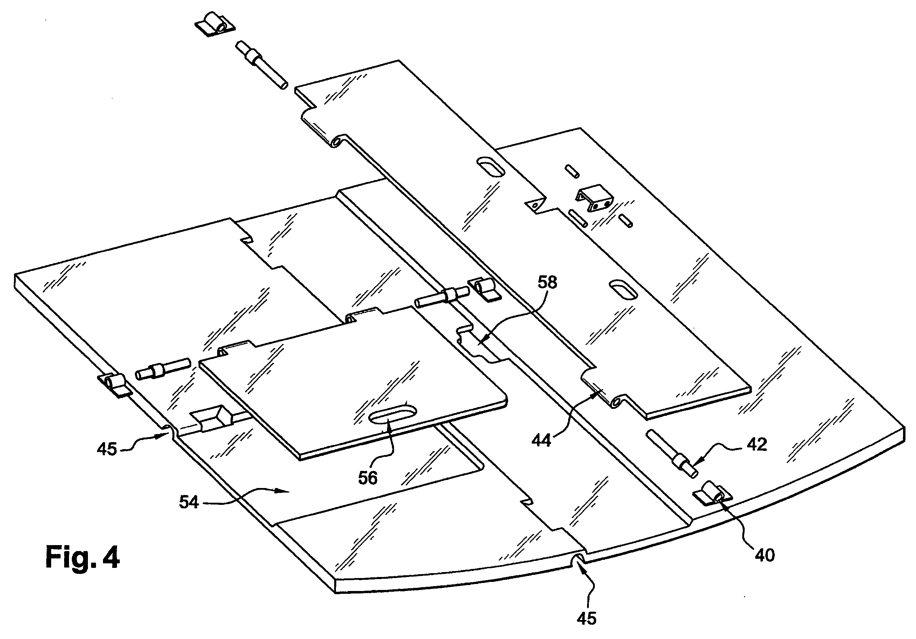

L'articulation des volets est obtenue au moyen de charnières 40 représentées plus en détails à la figure 4. Ces charnières comprennent des broches 42, qui sont coulissées dans les alésages 44 des volets et qui servent ainsi d'axe de rotation des volets. A cet effet, le tapis 10 comporte des ouvertures 45 destinées à recevoir les alésages 44 des volets 26, 28 et les charnières 40 décrites précédemment.

Dans la position verticale dépliée, les volets 26, 28 sont maintenus entre eux par un loquet 46. La figure 3 représente une vue en coupe transversale, dont le plan de coupe vertical passe par le loquet et le volet 26. Ce loquet 46 est monté sur le volet longitudinal et pivote autour d'un axe 48 parallèle au volet 26, afin de pouvoir être rangé dans le logement du volet 26 prévu à cet effet, en position escamotée, et afin de pouvoir accrocher le deuxième volet 28 lorsque le premier volet 26 est en position dépliée. A cet effet le deuxième volet 28 comporte une empreinte 52 destinée à recevoir ledit loquet 46.

Dans cette position le casier de rangement est formé par les trois compartiments 34, 36 et 38 délimités par les volets 26 et 28, dont le fond est réalisé par le fond des logements et la face supérieure 22 du tapis 10.

Avantageusement les bords de la banquette 16 et du hayon 18 comportent une butée 53 de blocage du volet 26 en position verticale dépliée.

Le déploiement des volets 26,28 est rendu simple par l'existence de poignées 56 situées sur chacun des volets 26, 28. Ces poignées 56 présentent aussi l'avantage de faciliter la pose du tapis 10 lors de son montage dans le coffre du véhicule.

De préférence, le tapis comporte aussi une ouverture centrale 58, grâce à laquelle il est rendu possible de soulever le tapis 10 pour avoir accès à l'emplacement 60 de la roue de secours située en dessous, dans le plancher 14 du coffre.

Selon une autre variante de l'invention, le tapis 10 est constitué par au moins deux couches différentes nommées couche inférieure et couche supérieure.

Tel que représenté, la couche inférieure est une couche support rigide, et la couche supérieure est une couche souple, par exemple une couche de moquette.

Comme décrit précédemment, le tapis comporte des volets qui sont rangés dans des logements formés par découpe de la couche supérieure, dont l'épaisseur est égale à l'épaisseur « e' » du volet correspondant.

Ainsi en position escamotée, le volet 28 est en appui sur la couche support pour sa face interne.

Le basculement du volet d'une position escamotée horizontale vers une position dépliée verticale, est rendue possible par l'intermédiaire de la couche supérieur souple qui fait office de charnière 66. Avantageusement, une charnière supplémentaire 68 est placée entre la couche support 62 et le volet 28, afin de consolider le point de basculement.

Cette solution offre un tapis de coffre de véhicule de surface pratiquement plane lorsque le casier est en position escamotée, et une continuité d'aspect moquette.

## Revendications

1. Tapis (10) de véhicule, **caractérisé en ce qu'**il comporte des moyens pour l'agencement d'un casier de rangement, ces moyens comportant au moins deux volets (26, 28) pivotant entre une position horizontale escamotée et une position verticale dépliée, dans laquelle ils délimitent chacun une zone de rangement (34, 36, 38), et, en position escamotée, la surface formée par la face supérieure (22) du tapis et les volets ( 26, 28)est sensiblement plane, de manière à constituer un casier escamotable intégré au tapis (10).

2. Tapis de véhicule selon la revendication 1, caractérisé en ce le tapis comporte au moins un logement (54) prévu pour accueillir les différents moyens d'aménagement du casier en position horizontale escamotée.

3. Tapis de véhicule selon la revendication 1 ou 2, **caractérisé en ce que** le fond du casier est constitué par le tapis.

4. Tapis de véhicule selon l'une des revendications précédentes **caractérisé en ce que** les volets (26, 28) du casier sont montés pivotants par l'intermédiaire de charnières.

5. Tapis de véhicule selon les revendications 1 à 4, **caractérisé en ce que** le tapis comporte au moins une couche inférieure support et une couche supérieure de moquette, et **en ce que** le fond du casier est constitué par la couche inférieure support du tapis, et les charnières sont formées par la couche supérieure de moquette qui recouvre les volets du casier.

6. Tapis de véhicule selon les revendications 1 à 4, **caractérisé en ce que** le tapis est réalisé dans un matériau rigide.

7. Tapis de véhicule selon l'une des revendications précédentes **caractérisé en ce que** les volets coopèrent entre eux par l'intermédiaire d'un loquet, pour être maintenues en position verticale dépliée.

8. Tapis de véhicule selon l'une des revendications précédentes, **caractérisé en ce que** au moins deux volets opposés comportent une poignée de préhension.

## Patentansprüche

1. Fahrzeugmatte (10), **dadurch gekennzeichnet, dass** sie Mittel zur Anordnung eines Ablagefachs umfasst, wobei diese Mittel wenigstens zwei Klappen (26, 28) umfassen, welche zwischen einer eingezogenen horizontalen Position und einer vertikalen ausgefalteten Position, in welcher sie jedes einen Ablagebereich (34, 36, 38) begrenzen, drehbar sind, und, in eingezogener Position, die durch die obere Seite (22) der Matte und der Klappen (26, 28) gebildete Oberfläche im Wesentlichen eben ist, um ein in die Matte (10) integriertes einziehbares Fach zu bilden.

2. Fahrzeugmatte nach Anspruch 1, **dadurch gekennzeichnet, dass** die Matte wenigstens eine Unterbringung (54) umfasst, die dazu vorgesehen ist, unterschiedliche Mittel der Einrichtung des Fachs in horizontaler eingezogener Position aufzunehmen.

3. Fahrzeugmatte nach Anspruch 1 oder 2, **dadurch gekennzeichnet, dass** der Boden des Fachs durch die Matte gebildet ist.

4. Fahrzeugmatte nach einem der vorhergehenden Ansprüche, **dadurch gekennzeichnet, dass** die Klappen (26, 28) des Fachs vermittels Scharnieren drehbar befestigt sind.

5. Fahrzeugmatte nach den Ansprüchen 1 bis 4, **dadurch gekennzeichnet, dass** die Matte wenigstens eine untere Stützschicht und eine obere Teppichschicht umfasst, und dadurch, dass der Boden des Fachs durch die untere Stützschicht der Matte gebildet ist, und die Scharniere durch die obere Schicht des Teppichs, welcher die Klappen des Fachs bedeckt, gebildet wird.

6. Fahrzeugmatte nach den Ansprüchen 1 bis 4, **dadurch gekennzeichnet, dass** die Matte aus einem steifen Material verwirklicht ist.

7. Fahrzeugmatte nach einem der vorhergehenden Ansprüche, **dadurch gekennzeichnet, dass** die Klappen untereinander vermittels eines Schnappschlosses zusammenwirken, um in vertikaler ausgefalteter Position gehalten zu werden.

8. Fahrzeugmatte nach einem der vorhergehenden Ansprüche, **dadurch gekennzeichnet, dass** wenigstens zwei gegenüberliegende Klappen einen Greifgriff umfassen.

## Claims

1. Vehicle carpet (10), **characterized in that** it comprises means of arranging a storage unit, these means comprising at least two flaps (26, 28) pivoting between a collapsed horizontal position and an unfolded vertical position, in which they each delimit a storage zone (34, 36, 38), and, in the collapsed position, the surface formed by the upper surface (22) of the carpet and the flaps (26, 28) is approximately flat, in order to form a collapsible unit incorporated into the carpet (10).

2. Vehicle carpet according to claim 1, **characterized in that** the carpet comprises at least one recess (54) designed to receive the different means of arranging the unit in collapsed horizontal position.

3. Vehicle carpet according to claim 1 or 2, **characterized in that** the bottom of the unit is formed by the carpet.

4. Vehicle carpet according to one of the previous claims, **characterized in that** the flaps (26, 28) of the unit are mounted pivotably by means of hinges.

5. Vehicle carpet according to claims 1 to 4, **characterized in that** the carpet comprises at least one lower supporting layer and one upper carpet layer, and **in that** the bottom of the unit is formed by the lower supporting layer of the carpet, and the hinges are formed by the upper carpet layer that covers the flaps of the unit.

6. Vehicle carpet according to claims 1 to 4, **characterized in that** the carpet is made of a stiff material.

7. Vehicle carpet according to one of the previous claims, **characterized in that** the flaps cooperate with each other by means of a latch, in order to be held in the unfolded vertical position.

8. Vehicle carpet according to one of the previous claims, **characterized in that** at least two opposite flaps comprise a grab handle.
